# EUROPEAN PATENT SPECIFICATION

(11) **EP 3 668 677 B1**
(45) Date of publication and mention of the grant of the patent: **20.07.2022**
(21) Application number: 18857042.8
(22) Date of filing: 13.09.2018
(51) Int. Cl.: B23K 26/02, B23K 26/70, B23K 26/14, B23K 26/60, H01L 21/78, B28D 5/00, B23K 26/142, B23K 26/364, B23K 37/04

(54) **CUTTING METHOD FOR POLYMER RESIN MOLD COMPOUND BASED SUBSTRATES AND SYSTEM THEREOF**
SCHNEIDVERFAHREN FÜR SUBSTRATE AUF DER BASIS EINER POLYMERHARZFORMVERBINDUNG UND SYSTEM DAFÜR
PROCÉDÉ DE COUPE POUR SUBSTRATS À BASE DE COMPOSITE DE MOULAGE DE RÉSINE POLYMÈRE ET SYSTÈME ASSOCIÉ

(30) Priority: 13.09.2017 US 201762557891 P
(43) Date of publication of application: 24.06.2020
(73) Proprietor: Genuine Solutions Pte. Ltd., Singapore 408831 (SG)
(72) Inventor: CHAINUR, Sardjono, Singapore 408831 (SG); WANG, Zhongke, Singapore 641276 (SG)
(74) Representative: Rösler Rasch van der Heide & Partner
(86) International application number: PCT/SG2018/050467
(87) International publication number: WO 2019/054945

(56) References cited:
- WO-A1-2012/133760
- WO-A1-2013/100149
- CN-A- 104 011 836
- CN-U- 203 171 147
- JP-A- 2007 038 274
- JP-A- 2007 038 274
- JP-A- 2011 177 781
- JP-A- 2013 121 598
- JP-A- 2013 123 748
- US-A1- 2002 115 235
- US-A1- 2006 086 703

## Description

### FIELD OF THE INVENTION

The present invention relates to integrated circuit chip preparation, and more specifically, to a method of singulation of a polymer resin or substrate into integrated circuits by a laser ablation process.

### BACKGROUND

An integrated circuit ("IC"), also referred to as a microchip or chip, is a set of electronic circuits on a small flat piece of semiconductor material such as silicone. Integrating large numbers of tiny transistors results in circuits that are smaller, cheaper, and faster than those constructed of discrete electronic components. IC's are used in a myriad of electronic devices including computers, mobile phones, and other digital home appliances.

The main advantages of ICs over discrete circuits are cost and performance. Packaged ICs use much less material than discrete circuits. ICs are typically printed as a unit by photolithography whereas discrete circuits are constructed one transistor at a time. The components of ICs can switch quickly and consume comparatively little power because of their small size and close proximity. However, it is expensive to design ICs and fabricate the required photomasks. This high initial cost means ICs are only practical with high production volumes.

Semiconductor device fabrication is the process used to create ICs. It typically begins with cutting a wafer (i.e. substrate) made of semiconducting material such as silicon. Thereafter, ICs can be are created with a series of photolithographic and chemical processing steps.

Die preparation is the process of preparing a wafer for integrated circuit (IC) packaging and testing. Die preparation typically includes wafer mounting and wafer dicing. Wafer mounting is performed before the wafer is cut into separate dies. During this step, the wafer is mounted on a plastic tape that is attached to a ring. Dicing, cutting or singulation involves cutting the wafer into smaller parts. A wafer containing multiple identical integrated circuits is cut so that individual dies each contain one of those circuits. Various methods and equipment can be used to singulate individual semiconductor die from a semiconductor wafer. Typically, a technique called scribing or dicing is used to cut through the wafer with a diamond cutting wheel or a wafer saw along scribe grids.

Conventional methods of singulation use diamond sawing to cut a wafer into individual dies. However, diamond sawing of epoxy molding compound packages can be problematic. Edge chippings, edge cracks, copper smear, edge copper burr and solder bridging are common issues. Using water or a wet chemical slurry can help avoid some of these issues. However, leakage during mechanical sawing can be an additional problem. Others issues include the high cost of a mechanical saw, saw wear caused unstable chip dimensions and slow dicing speed.

Another limitation of diamond sawing is that it is only suited to cutting straight lines. Further, to allow for the alignment and the width of the cutting tool, each scribe grid must have a relatively large width. This consumes a large portion of the semiconductor wafer. Additionally, the cutting process is slow, often requiring more than an hour to scribe all of the scribe grids on the semiconductor wafer.

Abrasive water jet (AWJ) technology offers some improvement over conventional methods. A wet chemical slurry is forced through a small orifice which can be used to cut materials semiconductor chips. However, AWJ also has shortcomings. It is a generally slow process. Typically, AWJ limited to less than 1000 units per hour (UPH), even when used only for curved cuts. It also requires post-processing in the form of washing and drying. And while the water can be filtered and recycled, the vigorous AWJ action reduces the garnet grit size so it cannot be recycled. Other problems include high expenses and high noise levels which require acoustic protection/isolation for operators.

Lasers offer an improved method for die singulation and for marking wafers and packages. The laser has emerged as an attractive alternative to mechanical methods for singulating IC packages such as Quad-Flat No-leads (QFN), Fine-Pitch Ball Grid Array (FBGA), and Micro Secure Digital (SD) or Micro Secure Digital (SD) (MMC) as well as Direct Chip Attach (DCA) type packages. Often called laser sawing, this technique is particularly useful for contoured packages as well as for surface mount products. In the latter case, a laser's ability to make narrow cuts allows electronics to be placed very close to the edge for maximum yield and minimum footprint. Laser- based singulation is a "non-contact process" as there is no tool wear nor mechanical stress on the work piece. Moreover, laser cutting can yield consistent results. However, to be effective, laser techniques must address considerations such as speed, cost, and edge roughness. The prior-art reference JP 2007038274A discloses the preambles of claims 1 and 8, and provides a method for cutting a prepreg with laser beams to cut the prepreg that can prevent generation of cutting powder during cutting and prevent generation of glass fiber powder during handling after cutting.

Heat generated by lasers is often a concern. In laser singulation, thermal effects from laser heat present significant problems including edge thermal damage, material burning and ablation caused by the ejected material. It is generally not cost-effective to use ultra-short pulse picosecond (ps), femtosecond (fs) lasers or ultra violet (UV) lasers for dicing of packages due to their high cost. Further, neither femtosecond, picosecond lasers nor UV lasers can meet dicing industrial throughput requirements due their low power.

A need, therefore, exists for an improved laser cutting system and method for polymer resin mold compound based substrates using laser that overcome these limitations. The method should provide uniform singulation, with less time than conventional techniques and maintain a narrower scribe line.

### SUMMARY OF THE INVENTION

The following summary is provided to facilitate an understanding of some of the innovative features unique to the disclosed embodiment and is not intended to be a full description. A full appreciation of the various aspects of the embodiments disclosed herein can be gained by taking into consideration the entire specification, claims, drawings and abstract as a whole.

Embodiments include a system for singulation of a polymer resin compound into packages by a laser ablation process. The system includes a buffer station, a laser and a jig for holding the polymer resin compound. Vacuum pressure can be used to hold the polymer resin compound to the jig. The laser can be a pulsed laser with a repetition rate of 10 kHz and above. The buffer station includes a heating plate, optionally with a gas injector for emitting fast-cooling gas. Further, a source of compressed air or gas forces compressed air or gas in the direction of the laser.

The laser cuts along trenches that are embedded in the jig and the jig is cooled by circulating a liquid through a base plate with a system of internal pipes. The trenches can have a depth of approximately 1 to 3 centimeters and a width greater than or equal to 1 millimeter. In an alternative design, the trenches have a width greater than or equal to 0.5 mm.

Embodiments also include a method of singulation of a polymer resin compound into packages by a laser cutting process. The method includes steps of (a) loading the polymer resin compound onto a cutting jig, (b) activating a vacuum to secure the polymer resin compound to the cutting jig, (c) activating a pulse laser to cut the polymer resin compound along a series of trenches that are embedded in the cutting jig and (d) circulating a liquid through a base plate of the cutting jig to cool the polymer resin compound.

The method includes a step of pre-heating the substrate at a buffer station and optionally injecting fast-cooling gas before loading it onto the cutting jig. Pressurized air or gas can be used to cool the ablated area and/or remove debris. The packages can be delivered to a cleaning station after they are cut.

The invention is defined in the independent claims. Further preferred embodiments are provided in the dependent claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the disclosure is not limited to specific methods and instrumentalities disclosed herein. Moreover, those in the art will understand that the drawings are not to scale. Wherever possible, like elements have been indicated by identical numbers.
**FIG. 1** depicts a substrate and a laser beam used for singulation.
**FIG. 2A** is a flow chart that lists the steps of a laser cutting method of singulation of a polymer resin mold compound package or substrate into chips by a laser ablation process.
**FIG. 2B** is a flow chart that lists the steps cleaning chips after the laser ablation process.
**FIG. 3A** depicts a top view of a cutting jig without packages or substrates loaded on it.
**FIG. 3B** depicts a front view of a cutting jig without packages or substrates loaded on it.
**FIG. 4A** depicts side views of a cutting jig.
**FIG. 4B** depicts close-up view of a vacuum hole.
**FIG. 5** depicts the direction of chilled water that circulates through the base plate on which the cutting jig is mounted to cool the cutting jig.
**FIG. 6A** depicts strip package of Interposer attached with OLGA.
**FIG. 6B** depicts singulation at a first step.
**FIG. 6C** depicts singulation at a second step.
**FIG. 6D** depicts singulation at a third step.
**FIG. 6E** depicts singulation at a fourth step.
**FIG. 6F** depicts individual packages after singulation.
**FIG. 6G** depicts edges of individual packages after singulation.

### DETAILED DESCRIPTION OF THE INVENTION

### Definitions

While the invention is primarily described for the singulation of an epoxy molding compound, it is understood that the invention is not so limited and can be used to assist with other endeavors that require precise shaping and molding of small components. And while reference is made to a polymer resin compound, the technology is easily transferable to other substrates. The particular values and configurations discussed in these non-limiting examples can be varied and are cited merely to illustrate at least one embodiment and are not intended to limit the scope thereof.

Reference in this specification to "one embodiment/aspect" or "an embodiment/aspect" means that a particular feature, structure, or characteristic described in connection with the embodiment/aspect is included in at least one embodiment/aspect of the disclosure. The use of the phrase "in one embodiment/aspect" or "in another embodiment/aspect" in various places in the specification are not necessarily all referring to the same embodiment/aspect, nor are separate or alternative embodiments/aspects mutually exclusive of other embodiments/aspects. Moreover, various features are described which may be exhibited by some embodiments/aspects and not by others. Similarly, various requirements are described which may be requirements for some embodiments/aspects but not other embodiments/aspects. Embodiment and aspect can be in certain instances be used interchangeably.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. For convenience, certain terms may be highlighted, for example using italics and/or quotation marks. The use of highlighting has no influence on the scope and meaning of a term; the scope and meaning of a term is the same, in the same context, whether or not it is highlighted. It will be appreciated that the same thing can be said in more than one way.

Consequently, alternative language and synonyms may be used for any one or more of the terms discussed herein. Nor is any special significance to be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only, and is not intended to further limit the scope and meaning of the disclosure or of any exemplified term. Likewise, the disclosure is not limited to various embodiments given in this specification.

Without intent to further limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, all technical and scientific terms used herein have the same meaning as commonly understood by one of ordinary skill in the art to which this disclosure pertains. In the case of conflict, the present document, including definitions, will control.

The term "die" refers to a block of semiconducting material on which a functional circuit is fabricated. Typically, integrated circuits are produced in large batches on a single wafer of electronic-grade silicon (EGS) or other semiconductor (such as GaAs) through processes such as photolithography. The wafer is cut ("diced") into many pieces, each containing one copy of the circuit. Each of these pieces is called a die.

Embedded Wafer Level Ball Grid Array (eWLB) is a packaging technology for integrated circuits. The package interconnects are applied on an artificial wafer made of silicon chips and a casting compound. eWLB is a further development of the classical Wafer Level Ball Grid Array Technology (WLB or WLP: wafer level package). The main driving force behind the eWLB technology was to allow more space for interconnect routing.

The term "galvanometer scanner laser" refers to laser beam movement that is controlled through a galvanometer scanner. The scanner contains two galvo scan mirrors that deflect an incident laser beam in X and Y. After the two scan mirrors, there is a focal lens to focus the laser beam. The executing of the two-axis motions, both moving up and down, as well as moving back and forth, leads to scanning of the laser beam for singulation of a substrate. The focused beam after the galvo scanner is used to singulate a substrate.

The term "integrated circuit," "IC," "microchip," "silicon chip," "computer chip" or "chip" refers to a piece of specially prepared silicon (or another semiconductor) into which an electronic circuit is etched using photolithographic techniques. Silicon chips can contain logic gates, computer processors, memory and special devices. Because the chip is fragile, it is usually surrounded by a tough plastic package. Electrical contact with the chip is provided through metal legs that protrude from the package.

The term "kerf" refers to narrow channel left behind by a saw, and (relatedly) the measure of its width, which depends on several factors including the width of the saw blade, the set of the blade's teeth, the amount of wobble created during cutting and the amount of material pulled out of the sides of the cut. When using a laser, the kerf is dependent upon the properties of the material being cut, the workpiece thickness, the lens focal length and the type of cutting gas used in the laser.

The term "laser ablation" refers to the process of removing material from a solid surface by irradiating it with a laser beam. At low laser flux, the material is heated by the absorbed laser energy and evaporates or sublimates.

The term "organic land grid array" or "OLGA" refers to a leadless package with air cavity and organic substrate with patterned conductive traces. ASIC and LEDs with different wavelengths are integrated in the package depending on specific applications. Connections are made through the leads (terminal pin) on the bottom surface of the package. These leads can be directly soldered onto the PCB.

The term "package stacking," or "package on package" refers to an integrated circuit packaging method to combine vertically discrete logic and memory ball grid array (BGA) packages. Two or more packages are installed atop each other, (i.e. stacked, with a standard interface to route signals between them). This allows higher component density in devices, such as mobile phones, personal digital assistants (PDA), and digital cameras.

The term "photolithography" or "optical lithography" refers to a process used in microfabrication to pattern parts of a thin film or the bulk of a substrate. Light is used to transfer a geometric pattern from a photomask to a light-sensitive chemical "photoresist" on the substrate.

The term "singulation," "die cutting" or "dicing" refers to a process of reducing a wafer containing multiple identical integrated circuits to individual dies each containing one of those circuits. The process can involve scribing and breaking, mechanical sawing or laser cutting. Following the dicing process, the individual silicon chips are encapsulated into chip carriers which are then suitable for use in building electronic devices such as computers.

Other technical terms used herein have their ordinary meaning in the art that they are used, as exemplified by a variety of technical dictionaries. The particular values and configurations discussed in these non-limiting examples can be varied and are cited merely to illustrate at least one embodiment and are not intended to limit the scope thereof.

### Description of Preferred Embodiments

Die preparation typically includes substrate mounting followed by substrate dicing or cutting. The substrate is typically a polymer resin mold compound. The invention utilizes vacuum pressure to mount a substrate onto a cutting jig. Thereafter, laser technology is used to cut the substrate into sections (i.e. chips).

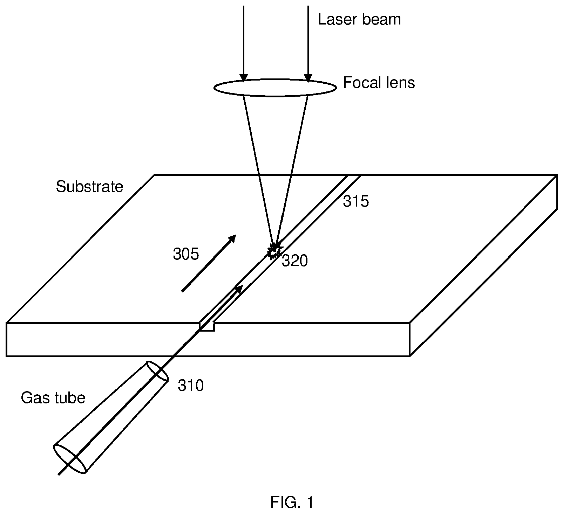

**FIG. 1** depicts a substrate being cut by laser ablation. A focal lens directs the laser beam into a point of contact the substrate at the laser soft ablation spot **320.** The laser beam moves in a direction depicted by the arrow **305.** The scribe line or singulation street **315** is formed by the laser. The laser is directed over the substrate multiple times (i.e. multiple passes) to separate the substrate into individual packages. A pulsed laser beam can be used with a combination of passes at different speeds and laser settings. This allows single pass singulation of units at high speed.

A gas tube is also depicted. The outlet of the gas tube **310** directs gas or compressed air in a direction parallel to the singulation street. This cools the substrate and removes particles or debris that result from the cutting process. As depicted, it is aligned with the direction of beam movement along the cutting street.

A metal jig is used for holding the substrate while it is cut (not shown). The jig includes trenches to allow the laser beam to penetrate during cutting. Further, the jig can use water to cool the substrate. Built-in piping in a base plate can allow water to circulate and cool the substrate during cutting by drawing away heat from the jig.

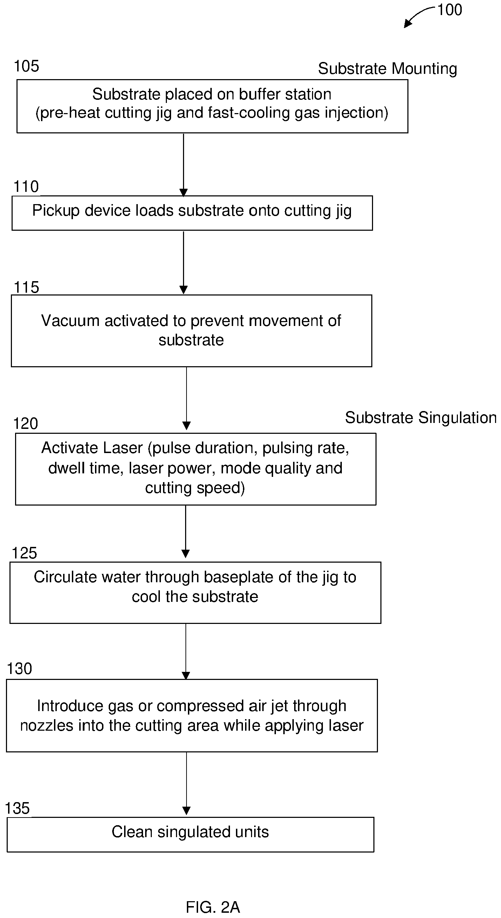

**FIG. 2A** is a flow chart **100** of a laser cutting method of singulation of a substrates into chips by a laser ablation process, according to one embodiment. The process can be separated into substrate mounting and substrate singulation. A picker (pick and place machine or robot) can be used to move the substrate and/or singulated units.

At step **105,** the substrate is placed on a buffer station. The buffer station includes a heated plate to pre-heat the substrate with optional injection of fast-cooling gas before placement on the cutting jig. The fast-cooling gas can cool the heated polymer resin quickly such that the form it has taken after pre-heating is preserved before loading the polymer resin compound onto the cutting jig. This step can release warpage on the substrate before it is placed on the cutting jig which ensures a good vacuum seal.

Thereafter, the pickup device can load the substrate onto the cutting jig ("jig") from the buffer station **110.** The cutting jig firmly holds the substrate while it is cut into individual chips. The substrate can be secured by vacuum pressure. Step 115 depicts the activation of vacuum to create a suction force upon the substrate and prevent movement. Vacuum holes can be round (square units) or oblong (rectangular units).

The cutting jig can be built with a metal based material such as Steel Use Stainless (SUS) or Aluminum. The bottom portion of the jig can comprise at least one vacuum chamber to allow suction on units during cutting, thereby avoiding movement of the units. Each unit can rest on an island cut out from the cutting jig and supported with a layer of rubber 0.2 mm - 1.0 mm thick (preferably around 0.5 mm thick) to prevent scratches/damage on surface of the units.

Cutting ("singulation") is the next step **120** which is preferably performed with the substrate facing downward. The laser can cut the substrate into individual chips using a pulsed laser beam. A pulsed laser beam is used so that the substrate is cut using multiple passes at different speeds and laser parameters. This helps maintain the substrate at a lower temperature and prevents warping due to less thermal heating from the laser beam.

Debris from the cutting process can be removed using compressed air (e.g. N₂, Ar, or CO₂) that is introduced through nozzles into the cutting area. Nozzles can be located strategically to introduce the compressed air so that it is aligned parallel to the laser cutting street. The debris can be exhausted away from bottom of chamber. Debris and fumes generated during cutting can be removed through exhaust openings located at the sides and bottom of the jig (not shown). The compressed air can also help cool the cutting street, particularly at the laser contact area and to prevent "sparking" of the laser upon contact with the substrate.

Excess heat is a common problem presented with conventional methods of laser singulation. To overcome this issue, the jig can include a system for circulating chilled water to cool the substrates during cutting **125.** The temperature of chilled water is below 22 degrees Celsius (preferably around 10 degrees Celsius or lower). This cools the units during cutting, effectively transferring thermal heat generated by laser away from cutting area.

Gas or compressed air can be introduced through the nozzle onto the cutting area **130.** The laser beam can pass through a cutting nozzle along with compressed gas or air. This allows single pass singulation of units at high speed. After cutting, the singulated units held in cutting jigs can be cleaned to remove debris and dislodge cutting burrs/fibers left on the surface of units **135.** A vent can be activated to blow away debris that accumulates or settles during singulation. The cleaning process can include additional steps such as brushing to produce singulated units that are free of debris.

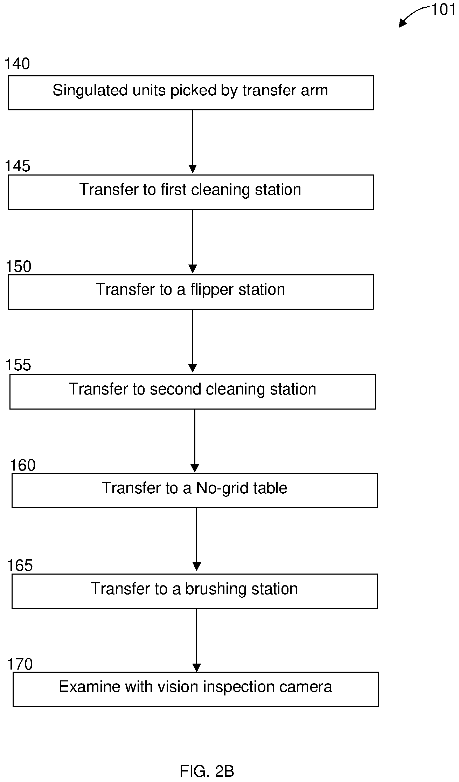

**FIG. 2B** is a flow chart **101** of the cleaning steps **101** for an automatic machine according to one embodiment. The units are picked by a vacuum transfer arm **140** and transferred to a first cleaning station **145.** At the first cleaning station, the top sides of the units are cleaned with a soft cloth/sponge soaked lightly in an alcohol solution (e.g. IPA) or plain deionized (DI) water. Next, the units are transferred to a flipper station **150,** flipped 180 degree and picked by another transfer arm. They are next transferred to second cleaning station **155** for cleaning. As with the first cleaning station, an alcohol solution such as IPA or DI water can be used. Here, the bottom sides of the units are cleaned. Next, the units are transferred to a no-grid table **160** where the units are transported on the table to pickers' pickup position. Rotating picker heads can pick each unit and transfer each to a brushing station **165** so that the units are brushed at all four sides. The units are then transferred through a vision inspection camera **170** and offloaded onto a tray. Remaining scrap rail can be removed automatically by another picker arm to be disposed to a scrap bin (not shown).

### Cutting Jig

In a preferred method of singulation, a cutting jig firmly holds the substrate during singulation. Two structural characteristics allow the substrate to be cut precisely without reaching high temperatures that can cause warpage or other damage. Trenches (i.e. indented regions in the jig) are embedded to allow the laser beam to penetrate during cutting. A base with internal piping allows chilled water to be circulated through the base plate. This removes heat from the jig to cool the substrate during cutting.

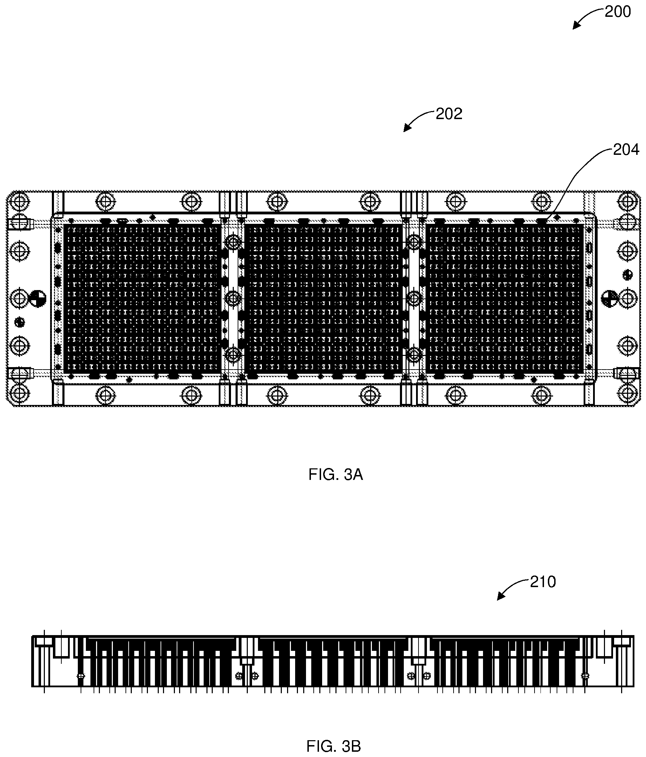

**FIG. 3A** depicts a top view **202** of a cutting jig **200** used in the method of **FIG. 2A****.** The trenches form a grid in the center portion. A substrate is placed over the cutting jig. The laser is directed to cut along the trenches to form individual packages from the substrate. **FIG. 3B** depicts front side view **210** to further illustrate the trenches in the jig (narrow white vertical lines). The trenches preferably have a depth of approximately 1 to 3 centimeters and a width greater than or equal to 1 millimeter.

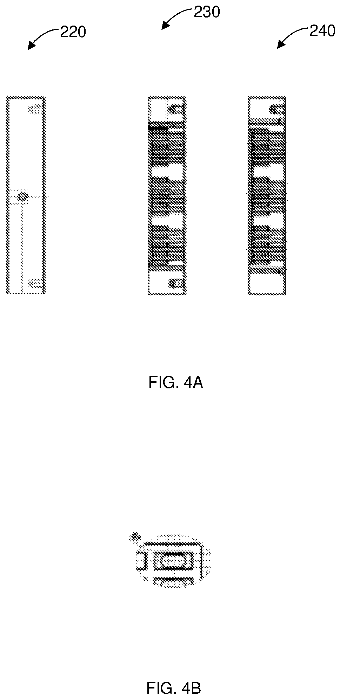

**FIG. 4A** depicts additional views of the jig, including a side view **220** and cross-sectional views **230** and **240** taken at different regions of the cutting jig. **FIG. 4B** depicts a detailed portion of a vacuum hole.

The strip surrounding rail (i.e. the perimeter of the strip without any units) can be supported by the jig, located with pins, and held in place by vacuum. Two separate vacuum lines, one to hold onto the strip rail and other onto the units are provided. Surrounding each unit are trenches cut into the metal jig, each of depth 1 cm - 3 cm (preferably around 2 cm or more) and width of minimum (units cutting kerf width + X mm). Where X value depends on each unit width and length dimension, at least (greater than or equal to) 0.5 mm (preferably 1 mm). The trenches are designed for a laser beam to penetrate during cutting and to collect debris generated from cutting. The tranches can be cleaned with high pressure air after each strip cutting. The vacuum holes can have shapes such as round (for use with square units) or oblong (for use with rectangular units).

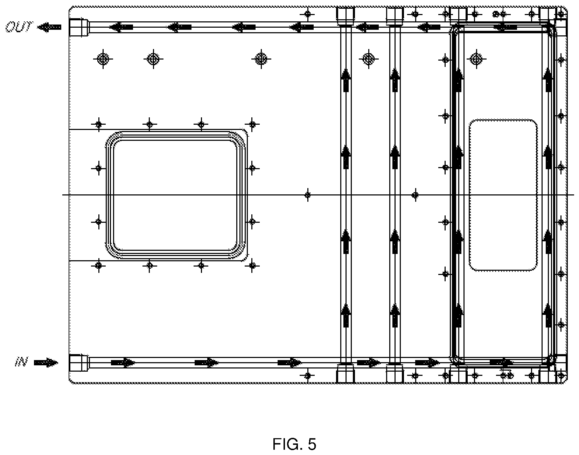

Water or another fluid can be used to cool the substrate during singulation. FIG. 5 depicts a base plate on which the cutting jig can be mounted. Chilled water is circulated through the base plate to cool the cutting jig and attached substrate. The arrows show the direction of water flow through a series of tubes or pipes.

The cutting jig can be fully enclosed in a cutting chamber. Debris and fumes generated from cutting can be exhausted through multiple exhaust openings located at the sides and bottom of the chamber. Further, an air blow at the top of the chamber can be directed at debris that has accumulated or settled on mechanical parts inside the chamber. This allows the debris to be exhausted out of the bottom of the chamber. Nitrogen, Carbon dioxide or compressed air can be used for this purpose. The nozzles can be placed so that the compressed air is aligned parallel to the laser cutting area. This helps cool the cutting area as well as clearing debris to minimise sparking of laser upon contact with subject material.

### Laser

One of two types of laser head design can be used for singulation. One design type is a laser beam generated through Galvanometer Scanner. A focal lens is used to allow vertical penetration of a laser beam into the surface of the substrate. Depending on the beam power intensity and its distribution on the substrate to be cut, the focal lens can be a conventional focal lens, a F-theta focal lens or a telecentric lens. For general singulation applications, a F-theta focal lens is sufficient for a scanning filed of 100 mm by 100 mm or smaller. This method allows for laser beam to shape the substrate with a combination of passes at different speeds and laser parameters. In the alternative, a cutting nozzle can be used with compressed gas (N₂/CO₂) or air. This allows single pass singulation of units at high speed.

In a preferred method, the invention uses laser for cutting, as it is low cost, requires free/minimal maintenance and meets other criteria for the cutting process. However, the cutting approach should include efforts to efficiently produce substrates with high quality edges.

To optimizing edge quality of substrates, peripheral heating should be minimal. This means maximizing the proportion of the total laser power that is delivered above the ablation threshold for the materials. One way to do this is to use a laser with short pulse duration and pulses with fast rise time. The heat created by each pulse is small and has time to dissipate before the next pulse arrives. In this regard, a pulsed laser is preferred rather than a Continuous-Wave (CW) laser. The pulsed laser can be a Nanosecond (ns), Near Infra-Red (NIR) lasers (such as Nd:YAG laser or fiber laser) or Pulse width tunable ns NIR lasers (such as pulse width from 1 ns to 500 ns) with a power of 10 - 200 Watts. The laser can be applied in a multi-line and multilayer process.

The singulation process can use a laser soft ablation technique to remove the materials. Achieving high edge quality requires a number of laser parameters to be optimized for the exact needs of singulation. The parameters include laser pulse duration, pulsing rate, dwell time, laser power, mode quality and cutting. The singulation process can be improved with periodic parameter changes. A high repetition rate "cleaning pass" can improve the kerf finish.

With regard to limiting peripheral thermal effects, spatial confinement of the laser pulse can be as important as temporal confinement. It can be crucial to use a laser beam that can be focused to a small intense spot rather than a diffuse area. This type of spot is obtained by designing the laser to produce Transverse Electro Magnetic (TEMoo) single-mode output, where the beam has a round cross section whose power peaks in the center. As a general rule with lasers, it becomes increasingly difficult to maintain high mode quality as power is increased. However, singulation may require relatively high power levels to deliver the speed and cost-effectiveness to compete mechanical sawing. So the laser must be carefully designed to deliver this high power level together with TEMoo output.

A high-pulse repetition rate can also be desirable. This enables fast sweeping of the laser beam across the material without producing a dotted line cut. For package singulation, a repetition rate below 10 kHz would limit processing speed. For this reason, it is preferred to use a singulation laser with pulse repetition rates above 10 kHz.

In principle, the laser could cut through an entire package, even at 1 mm total thickness in a single cut. But the dwell time required to achieve this would cause a detrimental thermal effect (i.e. a rough burning edge). Better results can be obtained by cutting using multiple sequential cuts. For example, multiple passes may be ideal to deliver an optimum combination of high throughput and edge quality for a 1 mm thick package or above such as 1.2 mm thick.

### WORKING EXAMPLE

### Singulation of interposer attached with OLGA

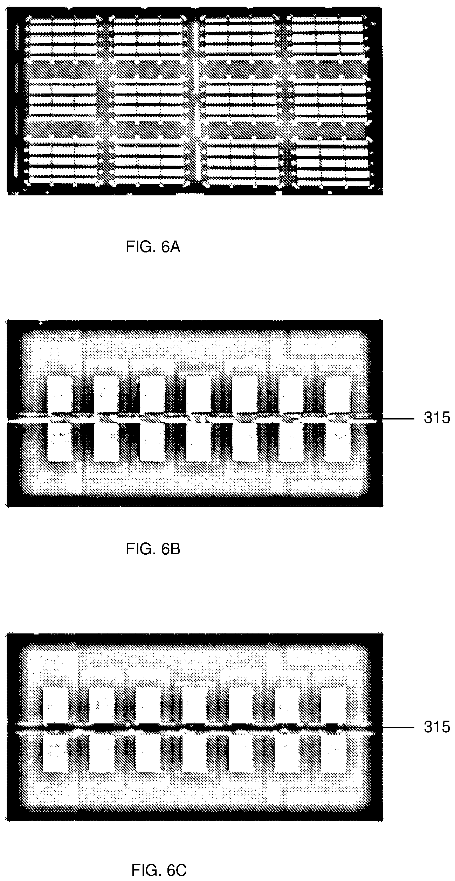

**FIG. 6A** depicts an example for laser singulation of a strip package of interposer attached with OLGA. A 100 nanosecond (ns) pulsed NIR fiber laser is used to singulate the resin mold (i.e. substrate) into packages. Multiple scans of the laser are used as described above. Three scans (i.e. lines) are used in this example. Each scan leads to a smoother, more complete singulation street **315** until the substrate is separated into individual packages.

The first scan is performed at a power 16W, a speed of 300mm/s and a frequency of 150KHz. The singulation results are depicted in **FIG. 6B****.** A straight, clean groove is formed along the singulation street **315.** The second step is performed at a power 28W, speed of 500mm/s and a frequency of 150KHz. The singulation results are shown in **FIG. 6C****.** A certain cutting depth is generated free of edge burning in Step 2.

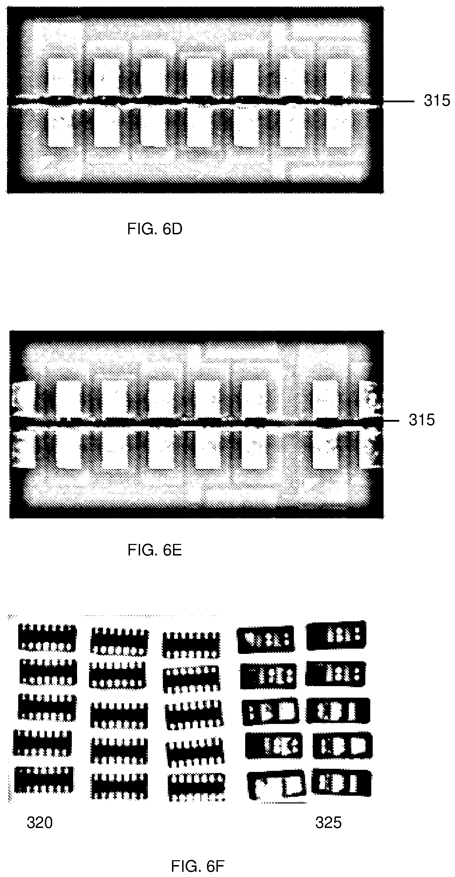

The third step is performed at a power of 68W, a speed of 750mm/s and a frequency of 150KHz. The singulation results are shown in **FIG. 6D****.** A straight, clean groove is formed along the singulation street **315.** The fourth step is performed at a power 45W, a speed of 750mm/s and a frequency of 200KHz. The singulation results are shown in **FIG. 6E****.** The final singulation step is completed so that the substrate is separated into smaller packages, as shown in **FIG. 6F****.** A view of the bottom of the packages is shown **320** along with a view of the top of the packages **325.**

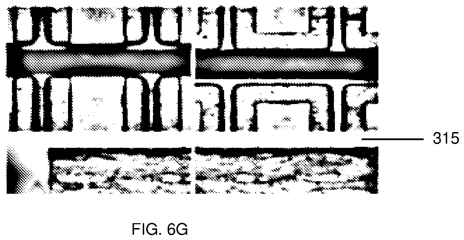

**FIG. 6G** depicts edges of individual packages after singulation. The chips have a clean top surface and a clean and straight sidewall.

### Choice of laser

A laser should be reliable, cost effective and sufficient to meet the cutting process. A pulsed laser is used rather than a CW laser. For example, an ns NIR fiber laser or Pulse width tunable ns NIR fiber laser with power of 10 - 200 Watts can be used. Other types of lasers such as an Nd:YAG laser can also be used.

### Singulation process

Laser soft ablation can be used with a multi line, multilayer process. Periodic parameter changes can improve the speed of the process and the quality of the packages. Further, a high-repetition rate "cleaning pass" can improve the kerf finish.

## Claims

1. A system for singulation of a polymer resin mold compound-based substrate into packages by a laser ablation process comprised of:
a buffer station;
a laser; and
a base plate with a system of internal pipes; and
a jig (200) for holding the polymer resin compound,
wherein, in use, the laser cuts along trenches that are embedded in the jig, and
such that, in use, the jig can be cooled by circulating a liquid through the base plate with the system of internal pipes;
**characterized in that**
the buffer station comprises a heated plate configured to pre-heat the polymer resin mold compound-based substrate before being loaded onto the jig.

2. The system of claim 1, wherein the trenches have a depth of approximately 1 to 3 centimeters and a width greater than or equal to 1 millimeter.

3. The system of claim 1, wherein the trenches have a width greater than or equal to 0.5 mm.

4. The system of claim 1, wherein vacuum pressure holds the polymer resin mold compound-based substrate to the jig (200).

5. The system of claim 1, wherein the laser is a pulsed laser with a repetition rate of 10 kHz and above.

6. The system of claim 1, wherein the buffer station includes a gas ejector for fast-cooling gas to cool the polymer resin mold compound-based substrate to preserve its form after pre-heating.

7. The system of claim 1, comprising a source of compressed air or gas which forces compressed air or gas in the direction of the laser.

8. A method of singulation of a polymer resin mold compound-based substrate into packages by a laser cutting process comprised of steps of,
loading the polymer resin mold compound-based substrate onto a cutting jig (200);
activating a vacuum to secure the polymer resin mold compound-based substrate to the cutting jig (200);
activating a pulse laser to cut the polymer resin mold compound-based substrate along a series of trenches that are embedded in the cutting jig (200); and
circulating a liquid through a base plate of the cutting jig (200) to cool the polymer resin mold compound-based substrate; and
**characterized in that**:
before loading, pre-heating the polymer resin mold compound-based substrate at a buffer station comprising a heated plate.

9. The method of claim 8, including an additional step of injecting fast-cooling gas to cool the polymer resin mold compound-based substrate to preserve its form after pre-heating before loading the polymer resin mold compound-based substrate onto the cutting jig (200).

10. The method of claim 8, including an additional step of ejecting pressurized air or gas in the direction of the laser to cool an area ablated by the laser (125).

11. The method of claim 8, including an additional step of ejecting pressurized air or gas in the direction of the laser to remove debris.

12. The method of claim 8, including an additional step of exhausting debris and/or fumes through one or more exhaust openings along edges of the cutting jig (200).

13. The method of claim 8, including additional steps of removing packages from the cutting jig (200) and transferring the packages to a cleaning station.

## Patentansprüche

1. System zur Vereinzelung eines Substrats auf der Basis einer Polymerharzformverbindung in Pakete durch einen Laserablationsprozess, das Folgendes umfasst:
eine Pufferstation;
einen Laser; und
eine Grundplatte mit einem System innenliegender Leitungen; und
eine Lehre (200) zum Halten der Polymerharzverbindung,
wobei bei Benutzung der Laser entlang von Gräben schneidet, die in der Lehre eingebettet sind, und derart, dass bei Benutzung die Lehre durch Zirkulierenlassen einer Flüssigkeit durch die Grundplatte mit dem System innenliegender Leitungen gekühlt werden kann;
**dadurch gekennzeichnet, dass**
die Pufferstation eine erwärmte Platte umfasst, die dazu ausgestaltet ist, das Substrat auf der Basis einer Polymerharzformverbindung vorzuwärmen, bevor es auf die Lehre geladen wird.

2. System nach Anspruch 1, wobei die Gräben eine Tiefe von ungefähr 1 bis 3 Zentimetern und eine Breite, die größer als oder gleich 1 Millimeter ist, aufweisen.

3. System nach Anspruch 1, wobei die Gräben eine Breite, die größer als oder gleich 0,5 Millimeter ist, aufweisen.

4. System nach Anspruch 1, wobei Unterdruck das Substrat auf der Basis einer Polymerharzformverbindung an der Lehre (200) hält.

5. System nach Anspruch 1, wobei der Laser ein Pulslaser mit einer Wiederholungsrate von 10 kHz und darüber ist.

6. System nach Anspruch 1, wobei die Pufferstation einen Gasstrahler für schnell kühlendes Gas umfasst, um nach dem Vorwärmen das Substrat auf der Basis einer Polymerharzformverbindung zu kühlen, um seine Form zu bewahren.

7. System nach Anspruch 1, das eine Druckluft- oder -gasquelle umfasst, die Druckluft oder -gas in Richtung des Lasers ausstößt.

8. Verfahren zur Vereinzelung eines Substrats auf der Basis einer Polymerharzformverbindung in Pakete durch einen Laserschneidprozess, der folgende Schritte umfasst:
Laden des Substrats auf der Basis einer Polymerharzformverbindung auf eine Schneidlehre (200);
Aktivieren eines Vakuums, um das Substrat auf der Basis einer Polymerharzformverbindung an der Schneidlehre (200) zu sichern;
Aktivieren eines Pulslasers, um das Substrat auf der Basis einer Polymerharzformverbindung entlang einer Reihe von Gräben, die in der Schneidlehre (200) eingebettet sind, zu schneiden; und
Zirkulierenlassen einer Flüssigkeit durch eine Grundplatte der Schneidlehre (200), um das Substrat auf der Basis einer Polymerharzformverbindung zu kühlen; und
**gekennzeichnet durch**:
Vorwärmen des Substrats auf der Basis einer Polymerharzformverbindung an einer Pufferstation, die eine erwärmte Platte umfasst, vor dem Laden.

9. Verfahren nach Anspruch 8, das einen zusätzlichen Schritt des Einblasens von schnell kühlendem Gas umfasst, um - nach dem Vorwärmen und vor dem Laden des Substrats auf der Basis einer Polymerharzformverbindung auf die Schneidlehre (200) - das Substrat auf der Basis einer Polymerharzformverbindung zu kühlen, um seine Form zu bewahren.

10. Verfahren nach Anspruch 8, das einen zusätzlichen Schritt des Ausstoßens von Druckluft oder -gas in Richtung des Lasers umfasst, um einen Bereich, der durch den Laser (125) abgetragen wird, zu kühlen.

11. Verfahren nach Anspruch 8, das einen zusätzlichen Schritt des Ausstoßens von Druckluft oder -gas in Richtung des Lasers umfasst, um Abtrag zu entfernen.

12. Verfahren nach Anspruch 8, das einen zusätzlichen Schritt des Ausblasens von Abtrag und/oder Dämpfen durch eine oder mehrere Ausblasöffnungen entlang von Rändern der Schneidlehre (200) umfasst.

13. Verfahren nach Anspruch 8, das zusätzliche Schritte des Entfernens von Paketen von der Schneidlehre (200) und Überführens der Pakete zu einer Reinigungsstation umfasst.

## Revendications

1. Système destiné à la singularisation d'un substrat à base de composé de moulage de résine polymère en paquets moyens d'un procédé d'ablation au laser composé de :
un poste tampon ;
un laser ; et
une plaque de base comprenant un système de tuyaux internes ; et
un gabarit (200) destiné à maintenir le composé de résine polymère,
dans lequel, lors de son utilisation, le laser découpe le long de tranchées qui sont incrustées dans le gabarit, et
de telle sorte que, lors de son utilisation, le gabarit peut être refroidi par circulation d'un liquide à travers la plaque de base comprenant le système de tuyaux internes ;
**caractérisé en ce que**
le poste tampon comprend une plaque chauffante configurée pour préchauffer le substrat à base de composé de moulage de résine polymère avant d'être chargé sur le gabarit.

2. Système selon la revendication 1, dans lequel les tranchées ont une profondeur allant d'environ 1 à 3 cm et une largeur supérieure ou égale à 1 mm.

3. Système selon la revendication 1, dans lequel les tranchées ont une largeur supérieure ou égale à 0,5 mm.

4. Système selon la revendication 1, dans lequel une pression sous vide maintient le substrat à base de composé de moulage de résine polymère au gabarit (200) .

5. Système selon la revendication 1, dans lequel le laser est un laser à impulsions avec un taux de répétition supérieur ou égal à 10 kHz.

6. Système selon la revendication 1, dans lequel le poste tampon comprend un éjecteur de gaz permettant le refroidissement rapide de gaz afin de refroidir le substrat à base de composé de moulage de résine polymère pour conserver sa forme après préchauffage.

7. Système selon la revendication 1, comprenant une source d'air ou de gaz comprimé qui force l'air ou le gaz comprimé dans la direction du laser.

8. Procédé de singularisation d'un substrat à base de composé de moulage de résine polymère en paquets au moyen d'un procédé de découpe au laser composé des étapes consistant à,
charger le substrat à base de composé de moulage de résine polymère sur un gabarit de coupe (200) ;
activer un vide pour fixer le substrat à base de composé de moulage de résine polymère sur le gabarit de coupe (200) ;
activer un laser à impulsions afin de découper le substrat à base de composé de moulage de résine polymère le long d'une série de tranchées qui sont encastrées dans le gabarit de coupe (200) ; et
faire circuler un liquide à travers une plaque de base du gabarit de coupe (200) afin de refroidir le substrat de composé de moulage de résine polymère ; et
**caractérisé en ce que** :
avant le changement, préchauffer le substrat à base de composé de moulage de résine polymère au niveau d'un poste tampon comprenant une plaque chauffante.

9. Procédé selon la revendication 8, comprenant l'étape supplémentaire d'injection de gaz de refroidissement rapide afin de refroidir le substrat à base de composé de moulage de résine polymère pour conserver sa forme après le préchauffage avant de charger le substrat à base de composé de moulage de résine polymère sur le gabarit de coupe (200).

10. Procédé selon la revendication 8, comprenant une étape supplémentaire d'injection d'air ou de gaz pressurisé dans la direction du laser afin de refroidir une zone ablatée par le laser (125).

11. Procédé selon la revendication 8, comprenant une étape supplémentaire d'injection d'air ou de gaz pressurisé dans la direction du laser afin de d'éliminer les débris.

12. Procédé selon la revendication 8, comprenant une étape supplémentaire d'évacuation des débris et/ou des fumées par l'intermédiaire d'une ou de plusieurs ouvertures d'évacuation le long des bords du gabarit de parente (200).

13. Procédé selon la revendication 8, comprenant les étapes supplémentaires consistant à retirer les emballages du gabarit de coupe (200) et à transférer les emballages vers une station de nettoyage.
